Europäisches Patentamt

European Patent Office

Office européen des brevets

(11) Numéro de publication: **0 092 538**
A2

(12) ## DEMANDE DE BREVET EUROPEEN

(21) Numéro de dépôt: **83870034.2**

(22) Date de dépôt: **28.03.83**

(51) Int. Cl.³: **B 29 B 3/02**

(30) Priorité: **16.04.82 BE 207852**

(43) Date de publication de la demande: **26.10.83**
**Bulletin 83/43**

(84) Etats contractants désignés: **AT BE CH DE FR GB IT LI LU NL SE**

(71) Demandeur: **Région Wallonne représentée par l'Exécutif Régional Wallon, 11, Boulevard de l'Empereur, B-1000 Bruxelles (BE)**

(72) Inventeur: **Viatour, Georges Jules René G., Bouxhmont 11, B-4651 Battice (BE)**

(74) Mandataire: **Blanchart, André, Cellule de Gestion des Contrats Technologiques Place Joséphine Charlotte 3 (Boîtes 27, 28), B-5100 Namur (BE)**

(54) **Nouveau procédé de fusion de particules solides, machine appliquant ce procédé et produits ainsi obtenus.**

㊐ Des particules solides d'origine minérale notamment les matériaux vitreux et les métaux et d'origine organique notamment les polymères synthétiques sont fondues sous l'action combinée d'une pression supérieure à 50 MPa et d'un gradient de cisaillement supérieur à 5 s.$^{-1}$.

Ces particules sont soumises à cette action combinée dans une enceinte fermée entre deux plateaux dont l'un au moins est rotatif.

EP 0 092 538 A2

"Nouveau procédé de fusion de particules solides, machine appliquant ce procédé et produits ainsi obtenus".

La présente invention se rapporte à un nouveau procédé de fusion de particules solides sans apport de chaleur externe et à une machine de fusion basé sur ce principe ainsi qu'aux produits obtenus.

Par termes "sans apport de chaleur externe", on entend que le procédé engendre lui-même sa propre chaleur par conversion d'énergie et qu'il n'y a donc pas d'apport direct de chaleur par chauffage.

La fabrication de produits solides à partir de matières premières se présentant à l'état divisé fait appel à des technologies de mise en oeuvre exigeant l'apport de chaleur externe.

Suivant une technologie très répandue en métallurgie et pour le travail des matières plastiques, les matières premières sont préalablement fondues avant d'être transformées en produits finis ou semi-finis. Cette technologie de fusion exige, en général, l'emploi de hautes températures et par conséquent est grande consommatrice d'énergie. En outre, l'emploi de hautes températures pose de nombreux problèmes pour la réalisation de l'appareillage de mise en oeuvre. De plus, le procédé de fusion appliqué à des matériaux constitués de différents éléments trouve des limites du fait que certains matériaux se répartissent d'une manière non uniforme et donnent des produits finis hétérogènes.

De même, l'emploi de hautes températures ne permet pas l'incorporation en quantité suffisante d'éléments trop volatils et pourtant susceptibles d'améliorer les propriétés du produit final.

Suivant un autre procédé connu sous le nom de Métallurgie des Poudres, les matières premières mises en oeuvre sont agglomérées sous l'effet de la pression et de la température, ces deux paramètres intervenant de façon simultanée ou successive.

Si cette technologie, appliquée notamment aux matériaux métalliques ou non métalliques tels que certaines céramiques, présente par rapport à la première des avantages au point de vue consommation d'énergie, elle n'est toutefois pas appliquée indistinctement à tous les matériaux.

Le procédé dit de frittage est par conséquent limité à certaines matières premières et notamment à celles pour lesquelles la fusion ne peut être économiquement et/ou techniquement utilisée, et à certaines applications particulières.

Parmi les matières premières pouvant être difficilement traitées par frittage, citons notamment le verre.

La présente invention a pour but de remédier à ces divers inconvénients et a pour objet un nouveau procédé de fusion de particules solides sans apport de chaleur externe, caractérisé en ce que les particules solides sont soumises à l'action combinée d'une pression supérieure à 50 MPa et d'un gradient de cisaillement supérieur à 5 $s^{-1}$, de telle manière que la friction entre les particules engendre la fusion.

Elle concerne également une machine de fusion appliquant ce procédé ainsi que les produits obtenus.

Le nouveau procédé de fusion ne fait pas appel à l'apport de chaleur externe c'est-à-dire qu'il engendre sa propre chaleur par conversion d'énergie mécanique de friction en énergie thermique.

Par fusion, on comprend également les états voisins de la fusion tels que l'état pâteux, le ramollissement, la plastification ou la semi-fusion.

Le nouveau procédé dit de fusion présente le grand avantage de donner des produits finis ayant les caractéristiques physiques de ceux résultant d'une fusion classique, tout en étant obtenus à des températures très inférieures aux températures de fusion des matières premières mises en oeuvre.

Par particules solides, on comprend tout matériaux inorganique et/ou organique d'origine et de nature quelconque susceptible de se ramollir, de fondre ou de se transformer sous l'action de la chaleur. Ces particules solides peuvent éventuellement dégager des gaz. Elles peuvent également réagir entre elles pour former des produits homogènes de fusion comme par exemple des matériaux vitreux.

Ces particules solides sont utilisées à l'état divisé sous forme de particules, de granulés, de grains, de copeaux, de billes ou de poudres. Toutes les formes et profils peuvent être utilisés, à conditions qu'ils engendrent, lorsqu'ils sont soumis à l'action combinée d'une pression et d'un gradient de cisaillement élevés, des forces de friction suffisantes pour provoquer la fusion, terme pris dans le sens large comme dit ci-avant.

La granulométrie des particules solides peut être quelconque mais est choisie préférentiellement dans la gamme de 100 μm à 1 mm.

Une granulométrie fine est souhaitable afin d'obtenir le maximum de points de contact entre les particules, ceci favorisant une conversion efficace de l'énergie mécanique de friction en énergie calorifique.

En outre, plus les particules solides sont fines, plus il sera aisé de réaliser un mélange homogène des divers matériaux mis en oeuvre.

Il est évident, qu'un mélange homogène présente des avantages pour l'application du procédé et conduira à des produits finis de propriétés et de structure très uniformes et régulières.

Parmi les particules solides de nature inorganique pouvant être utilisées suivant la présente invention, seules ou en mélanges en toutes proportions, citons les matériaux vitreux, les matériaux céramiques, les métaux, les métaux ferreux, les métaux non-ferreux, leurs alliages, leurs oxydes, leurs sels ainsi que leurs mélanges.

Par matériaux vitreux, citons à titre d'exemples, les composés utilisés pour la fabrication du verre qu'il soit d'une composition classique ou autre ainsi que les verres récupérés et les verres métalliques.

Les matériaux céramiques comprennent à la fois les céramiques traditionnelles telles que celles employées pour le sanitaire, etc... et les céramiques nouvelles, par exemple les céramiques métalliques telles que les carbures, les nitrures métalliques ou autres.

Les matériaux utilisés seuls ou en mélanges peuvent être choisis parmi les éléments figurant dans le tableau périodique de Mendeleïev.

Les métaux ferreux comprennent le fer et ses alliages.

Les métaux non-ferreux comprennent par exemple le cuivre, le zinc, l'étain, l'antimoine, l'aluminium, le plomb et leurs alliages.

Les particules solides peuvent être des alliages des divers métaux et notamment des matériaux ferreux et non-ferreux et comprendre également divers oxydes de ces métaux; on peut également utiliser des sels et d'autres composés formés de cations et/ou d'anions quelconques.

A titre d'exemples, citons des alliages du type fonte, acier, acier inoxydable, aciers spéciaux, bronzes, laiton.

Parmi les oxydes, citons les oxydes de magnésium, aluminium, silicium, zinc, plomb, zirconium, lithium,etc...

Les particules solides de nature organique utilisées suivant la présente invention doivent être susceptibles de se ramollir, de fondre ou de se durcir sous l'action de la chaleur.

Les matériaux organiques répondant à cette condition sont notamment les polymères synthétiques, leurs alliages et leurs mélanges, qu'ils soient thermoplastiques ou thermodurcissables. Par polymère synthétique, on comprend notamment les homopolymères, copolymères, terpolymères qu'ils soient de nature synthétique ou artificielle.

A titre d'exemples de polymères synthétiques, citons les polyamides, les polyesters tels que le polyéthylène téréphtalate, le polycarbonate, les polyoléfines tels que le polyéthylène et le polypropylène, les dérivés vinyliques tels que le chlorure de polyvinyle, le polystyrène,les polyacrylates et polyméthacrylates et les polyuréthanes.

Les polymères synthétiques à haut point de fusion, pour lesquels les techniques classiques de mise en oeuvre posent de nombreux problèmes, peuvent être utilisés avantageusement dans la présente invention. Citons les polysulfones, les oxydes et sulfures de polyphénylène, les polyimides. Ces divers polymères peuvent être utilisés en mélanges en toutes proportions et être additionnés de divers autres composés tels qu'utilisés pour la fabrication des matières plastiques techniques et des composites.

Les alliages synthétiques, constitués d'un mélange de polymères formés de deux ou plusieurs composants liés par des forces intermoléculaires, peuvent être également utilisés comme particules solides suivant la présente invention. A titre d'exemples, citons les alliages à base d'acrylonitrile-butadiène-styrène (ABS), de chlorure de polyvinyle (PVC), de polycarbonate, de polyoléfines et de résines thermodurcissables liées à des élastomères et des thermoplastiques.

Suivant la présente invention, les particules solides sont soumises à l'action combinée d'une pression supérieure à 50 MPa et d'un gradient de cisaillement supérieur à 5 s$^{-1}$, de telle manière que la friction entre les particules engendre la fusion.

Dans une première phase, la pression croissante exercée sur les particules a pour effet de les comprimer et/ou de les écraser et ainsi, de provoquer un contact entre-elles de plus en plus intime.

Dans une seconde phase, sous l'action combinée de la pression et du gradient de cisaillement, des forces de friction élevées se développent amorçant la fusion aux endroits voisins où agit le gradient de cisaillement.

Dans une troisième phase, la fusion se propage d'une zone à l'autre pour gagner la totalité de la masse des particules. La masse fondue ainsi obtenue peut être ensuite refroidie ou utilisée directement pour le formage de produits finis ou sem-finis soit par coulage, moulage, extrusion ou injection.

La succession de ces trois phases s'accompagne d'une élévation de la température qui se prolonge ensuite par une stabilisation de la température, désignée par température de travail.

L'équilibre thermique ainsi obtenu est fonction de la nature des particules solides utilisées et des conditions opératoires choisies.

L'élévation de température est toujours très rapide et l'autorégulation du système intervient régulièrement au début de la troisième phase décrite ci-dessus.

Il est surprenant de constater que l'action combinée d'une pression et d'un gradient de cisaillement élevés provoque la fusion des particules solides à une température apparemment bien inférieure à leur température de fusion et dans un temps relativement court.

La tableau ci-après donne les conditions opératoires pour divers matériaux ainsi que la température relevée et par comparaison, les températures de travail suivant les procédés traditionnels.

Les matières employées sont les suivantes :

- le groisil est constitué de verre au plomb broyé, couramment employé en cristallerie et provenant de la Manufacture de Cristaux du Val Saint Lambert (V.S.L).

- le zamak est un alliage composé de 94,94 % de zinc, 4 % d'aluminium, 1 % de cuivre et 0,06 % de magnésium.

- le polysulfone utilisé est un polymère thermostable UDEL de Union Carbide.

| Matière. | Groisil. | Zamak. | Polysulfone. |
|---|---|---|---|
| Pression appliquée à la matière (MPa) | 103 | 71 | 71 |
| Gradient de cisaille-ment (s $^{-1}$) | 26 | 31 | 18 |
| T° de travail suivant le procédé (°C) | 452 | 184 | 88 |
| T° de travail suivant les procédés tradi-tionnels (°C) | 1100 | 385 | 360 |

Pour expliquer ce phénomène de fusion à plus basse température, il n'existe à l'heure actuelle que des débuts de théories scientifiques. S'il est certain que l'énergie mécanique de friction se transforme en chaleur, d'autres forces énergétiques interviennent et il n'est pas exclu que des forces de nature physique et chimique se développent entre les molécules et atomes en présence.

L'évolution des températures relevées jusqu'à l'équilibre dépend notamment :

- de la granulométrie et de la forme des particules solides ;
- de la nature des particules solides ;
- de la pression et du gradient de cisaillement.

Ceci n'exclut pas, qu'au sein de la masse formée par les particules solides, des températures locales correspondant aux températures de fusion ou à l'état pâteux des composants en présence soient atteintes. Aucune preuve ne permet de corroborer, ni d'exclure cette hypothèse. Par contre, il est établi que globalement le bilan énergétique du procédé de fusion de particules solides sans apport de chaleur externe est très favorable comparé aux autres procédés connus.

Ainsi, suivant le procédé revendiqué, pour du groisil VSL, la quantité d'énergie requise pour fondre le produit est de 1,5 KWh/kg.

Une industrie traditionnelle du verre, pour le même travail exigerait une consommation énergétique 6 fois plus élevée.

De même, la fusion et la mise en oeuvre du zamak par le procédé revendiqué nécessite 0,48 KWh/kg alors que pour une industrie traditionnelle, la valeur est environ 4 fois plus importante.

La pression exercée sur les particules solides doit être supérieure à 50 MPa pour que les forces de frottement engendrées par le cisaillement sur les différentes particules soient suffisantes pour amorcer la fusion. La pression favorise le nombre de points de contact entre les particules solides et permet ainsi une meilleure propagation de la chaleur au sein de la masse.

La pression est supérieure à 50 MPa et de préférence, la pression est comprise entre 50 et 1000 MPa. En général, on travaille dans une zone comprise entre 70 et 700 MPa.

D'une manière générale, la pression doit être telle que suivant les matières premières utilisées, les particules solides se trouvent en contact intime et susceptibles, sous l'action combinée du gradient de cisaillement, de développer.des forces de friction telles que les particules entrent en fusion.

Le gradient de cisaillement utilisé conjointement avec la pression suivant la présente invention est supérieur à 5 s$^{-1}$ et de préférence est compris entre 5 et 8000 s$^{-1}$.

Ce gradient de cisaillement a été mesuré suivant la formule :

$$\gamma = \frac{\Omega \, \rho}{H}$$

où : - $\Omega$ (rad/sec) $= \frac{2\pi N}{60}$ avec N vitesse de rotation (t/min)

- $\rho$ (m) est la distance du centre à l'endroit où l'on calcule le gradient de cisaillement

- R est le rayon maximum (m)

- H distance entre les deux plateaux (m).

L'action de la pression et du gradient de cisaillement sur les particules solides peut être simultanée ou non. En général, la pression est appliquée progressivement après que le gradient de cisaillement ait été induit au sein des particules solides.

La présente invention a également pour objet une machine de fusion de particules solides, caractérisée en ce que les particules sont soumises, dans une enceinte fermée, à l'action combinée d'une pression supérieure à 50 MPa et d'un gradient de cisaillement supérieur à 5 $s^{-1}$ entre deux plateaux dont l'un au moins est rotatif.

Un des plateaux ou éventuellement les deux sont rotatifs de manière à créer le gradient de cisaillement. Si les deux plateaux sont rotatifs, les sens de rotation peuvent être identiques ou opposés.

La pression est exercée sur un des plateaux ou éventuellement sur les deux.

Suivant une réalisation préférentielle de la machine de fusion et, notamment pour des raisons mécaniques et énergétiques, un des plateaux est rotatif et l'autre transmet la pression à la masse de particules solides présentes dans l'enceinte fermée.

Sous l'action de la pression exercée sur au moins un des plateaux dont un au moins est rotatif et engendre le gradient de cisaillement, les plateaux se rapprochent et produisent, entre les particules solides, une friction entraînant leur fusion. Les particules solides sont introduites à l'état divisé par un canal d'alimentation débouchant dans l'enceinte fermée. Dès que les particules solides ont rempli toute l'enceinte fermée, l'ouverture du canal d'alimentation est obstruée et l'on soumet ensuite la masse des particules à l'action de la pression en vue d'un premier compactage. Ensuite, la pression est relâchée avant de mettre en rotation un des plateaux pour engendrer le gradient de cisaillement. On soumet ensuite les particules solides à l'action d'une pression croissante.

La pression est exercée, par l'intermédiaire d'un ou de plusieurs cylindres hydrauliques, à l'un au moins des plateaux.

Pour éviter les surcharges mécaniques et électriques, la masse des particules solides est soumise, d'abord à l'action du gradient de cisaillement par rotation d'au moins un des plateaux et ensuite à l'action d'une pression croissante.

Le processus de fusion des particules présentes dans l'enceinte fermée de la machine est réalisé suivant les trois phases décrites ci-avant et comprenant la compression et/ou l'écrasement des particules, l'amorçage de la fusion et la propagation de la fusion.

La fusion se produit aux endroits du cisaillement maximum à savoir à l'interface entre une partie fixe et une partie tournante.

Dans le cas d'une machine de fusion dont les deux plateaux sont rotatifs, la fusion se propage depuis les zones proches des deux plateaux rotatifs vers l'intérieur de l'enceinte.

La machine de fusion comprend deux plateaux et un cylindre solidaire ou non d'un des plateaux, pour former l'enceinte fermée, un canal d'alimentation pour les particules solides débouchant dans ladite enceinte, un moyen de mise sous pression de l'un au moins des plateaux, et un moyen de mise en rotation de l'un au moins des plateaux.

Le cylindre forme avec les plateaux l'enceinte fermée. Ce cylindre peut être entièrement solidaire d'un des plateaux et dans ce cas subit tous les mouvements de rotation et/ou de translation dudit plateau. Si le cylindre n'est pas entièrement solidaire de l'un des plateaux, il présente alors un mouvement de translation par rapport à ce plateau, lequel continue à l'entraîner en rotation.

Le canal d'alimentation pour les particules solides possède un orifice débouchant dans l'enceinte fermée. Cet orifice est pratiqué dans le cylindre constituant une partie de l'enceinte.

Dans le cas où l'orifice est pratiqué dans le cylindre, son ouverture et sa fermeture se fait par déplacement relatif du cylindre par rapport à un des plateaux ou par un système d'obturation à commande indépendante de la machine de fusion.

Dans le cas où l'orifice est pratiqué dans un des plateaux, son ouverture et sa fermeture se font par un système d'obturation à commande indépendante de la machine de fusion.

Le moyen de mise sous pression de l'un au moins des plateaux est d'un type connu et consiste par exemple en une presse hydraulique.

La mise en rotation de l'un au moins des plateaux est obtenue par tout moyen connu, par exemple, un moteur électrique associé à un variateur et un réducteur de vitesse.

La machine de fusion de particules solides sans apport de chaleur externe peut comporter des dispositifs de formage, de coulage, de moulage, d'injection et d'extrusion. De tels dispositifs peuvent être disposés axialement ou radialement.

Par axialement, on comprend que les dispositifs sont disposés suivant la direction de l'application de la pression. Radialement signifie que les dispositifs sont disposés dans un plan perpendiculaire à la direction de l'application de la pression.

Les dispositifs de formage sont reliés à l'enceinte fermée par un canal d'injection.

Dans le cas d'une disposition radiale, le dispositif de formage peut être solidaire du cylindre. L'ouverture et la fermeture du canal d'injection peuvent être obtenues soit par un dispositif connu quelconque indépendant de la machine de fusion, soit par le déplacement relatif du cylindre par rapport aux plateaux.

Dans le cas d'une disposition axiale, le dispositif de formage peut être solidaire d'un des plateaux. L'ouverture et la fermeture du canal d'injection doivent être dans ce cas obtenues par un dispositif indépendant de type connu; par exemple par le mouvement d'un piston coulissant dans le canal d'injection.

Les avantages du procédé faisant l'objet de la présente invention et de la machine de fusion basés sur ce principe sont nombreux. Le procédé entraîne une dépense énergétique globale très inférieure à celle nécessaire dans le cas des procédés classiques. Il permet en outre d'être appliqué à tous types de matériaux tels que décrits ci-avant. En plus, il permet d'obtenir des matériaux nouveaux irréalisables par voies classiques.

Suivant le procédé, la durée de mise en oeuvre suffisamment réduite permet l'obtention de matériaux nouveaux comportant des constituants considérés comme trop instables aux températures habituellement utilisées dans les procédés classiques.

Du fait que les matières premières à mettre en oeuvre peuvent être très diverses et que le procédé se prête à tout mélange, il est possible d'obtenir des produits variés et nouveaux de structure homogène. A titre d'exemple, citons le verre chargé de sélénium. Par fusion classique du verre, 0,1 à 0,2 % de sélénium peuvent y être introduits. Le procédé revendiqué permet d'introduire dans le verre 3 à 4 % sans aucune difficulté et même davantage.

Si l'on utilise dans le mélange un composé qui, sous l'effet de la température donne naissance à un gaz, le produit obtenu peut être de structure alvéolaire.

Le procédé revendiqué trouve de nombreuses applications notamment dans les domaines de la métallurgie, de l'industrie des matériaux vitreux, de l'électrotechnique et de l'électronique.

La présente invention, sera mieux comprise à l'aide des dessins suivants, représentant quelques réalisations non-limitatives de la machine de fusion telle que revendiquée.

La figure 1 représente une machine de fusion schématisée suivant la présente invention.

La figure 2 représente une machine de fusion comportant un dispositif de formage disposé radialement.

La figure 3 représente une machine de fusion comportant un dispositif de formage disposé axialement.

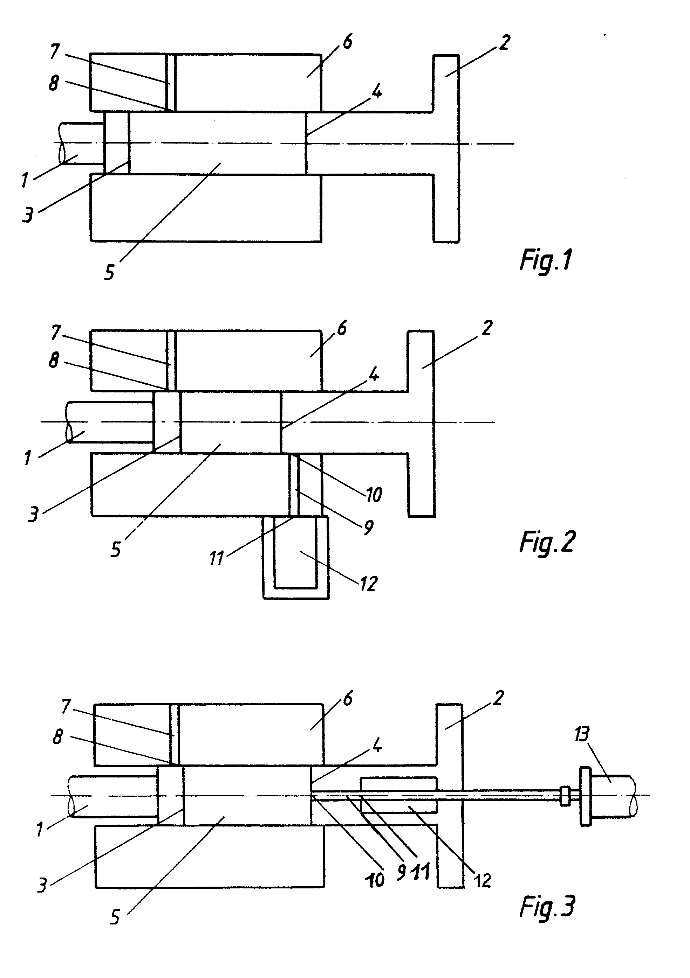

Suivant la figure 1, la machine de fusion comporte deux plateaux 1 et 2 dont les faces internes 3 et 4 constituent une partie des parois de l'enceinte fermée 5. Le cylindre 6 solidaire ou non d'un des plateaux forme avec ces derniers l'enceinte fermée 5 dans laquelle on introduit les particules solides par le canal d'alimentation 7 débouchant dans l'enceinte fermée en 8.

Le gradient de cisaillement est obtenu par la rotation d'au moins un des plateaux. Si les deux plateaux sont rotatifs, leur sens de rotation est identique ou opposé.

La pression est exercée sur au moins un des plateaux ou sur les deux par des moyens de transmission connus.

Sous l'effet de la pression, les faces internes 3 et 4 des plateaux 1 et 2 se rapprochent en obturant l'orifice 8 du canal d'alimentation 7, et l'action simultanée de la pression et du gradient de cisaillement provoque la fusion des particules solides présentes dans l'enceinte fermée 5.

Suivant la figure 2, la machine de fusion comporte le dispositif tel que représenté à la figure 1 en position de travail de fusion. Le plateau 1 obture dans cette position l'ouverture 8 du canal d'alimentation 7.

De plus, la machine de fusion comporte un dispositif de formage disposé radialement et comprenant un canal d'injection 9 avec un orifice 10 débouchant dans l'enceinte fermée 5. Le canal d'injection 9 débouche en 11 dans le moule de formage 12; ce moule pouvant comporter une ou plusieurs empreintes de formage.

L'ouverture de l'orifice 10 du canal d'injection 9 est obtenue par le déplacement longitudinal du cylindre 6.

La figure 3 représente un dispositif de fusion tel que représenté à la figure 2 et comportant un dispositif de formage 12 disposé axialement. Ce dispositif de formage se différencie de la figure 2 en ce que le canal d'injection 9 comporte un orifice 10 dont la fermeture et l'ouverture sont obtenues par un dispositif schématisé 13. Ce canal débouche en 11 dans le dispositif de formage 12.

La commande du dispositif de fermeture et d'ouverture 13 de l'orifice 10 est indépendante de la machine de fusion proprement dite. Cette commande peut consister en un cylindre pneumatique ou hydraulique qui commande une tige obturant l'orifice 10.

Les exemples suivants non-limitatifs permettront de mieux comprendre le procédé faisant l'objet de la présente invention :

Exemple.1

La machine de fusion utilisée pour la réalisation de cet exemple est schématisé à la figure 3.

La machine de fusion comporte un plateau 1 tournant, qui emmène en rotation le cylindre 6, mais qui peut se déplacer longitudinalement par rapport à ce cylindre.

La machine de fusion comporte également un plateau fixe 2 incluant le dispositif de formage, et sur lequel on applique la pression.

La matière employée est de la poudre de zinc d'une granulométrie comprise entre 150 et 250 μm.

La poudre est introduite dans l'enceinte fermée 5 par l'intermédiaire du canal d'alimentation 7 puis subit un compactage à une pression de 72 MPa. La pression est ensuite relâchée et on met en rotation le piston 1 et le cylindre 6 à une vitesse de 100 t/min., ce qui induit dans la poudre un gradient de cisaillement de 32 $s^{-1}$.

On applique ensuite une pression de 72 MPa par l'intermédiaire du piston 2.

A ce moment, la température augmente, et après 20 s. se stabilise à la température de travail de 180°C.

On augmente ensuite la pression jusqu'à 107 MPa et on injecte la matière dans le dispositif de formage comportant quatre empreintes d'éprouvettes.

La dépense d'énergie pour réaliser la fusion et l'injection de quatre éprouvettes parfaitement homogènes et de qualités comparables à celles obtenues par des procédés traditionnels est de 0,44 KWh/kg. Cette dépense serait d'environ 3,18 KWh/kg pour un procédé traditionnel.

Exemple.2

L'expérience a été conduite suivant le principe représenté à la figure 3 et décrit dans l'exemple 1.

Le mode opératoire de l'exemple 1 a été appliqué à des granulés de polystyrène d'une granulométrie de 5 mm.

La rotation du piston 1 et du cylindre 6 induit un gradient de cisaillement de 18 $s^{-1}$. Ce gradient est différent de celui de l'exemple 1 car le volume occupé par les granulés de polystyrène est plus important que celui occupé par la poudre de zinc. La distance entre les deux plateaux est donc supérieure à celle de l'exemple 1 et donc le gradient de cisaillement est plus petit.

La température se stabilise après 15 s. à la température de travail de 70°C.

La dépense d'énergie pour réaliser la fusion et l'injection des quatre éprouvettes est de 0,92 KWh/kg. La dépense d'énergie pour un procédé traditionnel est de l'ordre de 2,5 KWh/kg.

REVENDICATIONS.

1. Procédé de fusion de particules solides, sans apport de chaleur externe, caractérisé en ce que les particules solides sont soumises à l'action combinée d'une pression supérieure à 50 MPa et d'un gradient de cisaillement supérieur à 5 s. $^{-1}$, de telle manière que la friction entre les particules engendre leur fusion.

2. Procédé de fusion de particules solides, sans apport de chaleur externe, suivant la revendication 1, caractérisé en ce que la pression est comprise entre 50 et 1000 MPa et le gradient de cisaillement est compris entre 5 et 8000 s. $^{-1}$.

3. Procédé de fusion de particules solides, sans apport de chaleur externe, suivant les revendications 1 et 2, caractérisé en ce que les particules solides sont de nature inorganique et/ou organique.

4. Procédé de fusion de particules solides, sans apport de chaleur externe, suivant les revendications 1 à 3, caractérisé en ce que les particules solides sont des matériaux de nature inorganique choisis parmi les matériaux vitreux, les matériaux céramiques, les métaux, les métaux ferreux, les métaux non ferreux, leurs alliages, leurs oxydes, leurs sels ainsi que leurs mélanges.

5. Procédé de fusion de particules solides, sans apport de chaleur externe, suivant les revendications 1 à 3, caractérisé en ce que les particules solides sont des matériaux de nature organique choisis parmi les polymères synthétiques, leurs alliages et leurs mélanges.

6. Machine de fusion de particules solides, sans apport de chaleur externe, caractérisée en ce que les particules solides sont soumises dans une enceinte fermée à l'action combinée d'une pression supérieure à 50 MPa et d'un gradient de cisaillement supérieur à 5 s$^{-1}$, entre deux plateaux dont l'un au moins est rotatif.

7. Machine de fusion de particules solides, sans apport de chaleur externe, suivant la revendication 6, caractérisée en ce que sous l'action combinée de la pression exercée sur au moins un des plateaux et du gradient de cisaillement résultant de la rotation d'un au moins des plateaux, la friction entre les particules engendre leur fusion.

8. Machine de fusion de particules solides, sans apport de chaleur externe, suivant les revendications 6 et 7, caractérisée en ce qu'elle comprend deux plateaux et un cylindre solidaire ou non d'un des plateaux, pour former l'enceinte fermée, un canal d'alimentation pour les particules solides débouchant dans ladite enceinte, un moyen de mise sous pression de l'un au moins des plateaux, et un moyen de mise en rotation de l'un au moins des plateaux.

9. Machine de fusion de particules solides, sans apport de chaleur externe, suivant les revendications 6 à 8, caractérisée en ce qu'elle comporte des dispositifs de formage, de coulage, de moulage, d'injection et d'extrusion.

10. Machine de fusion de particules solides, sans apport de chaleur externe, suivant 9, caractérisée en ce que les dispositifs de formage sont disposés axialement ou radialement.

11. Produits obtenus par l'application des procédés faisant l'objet des revendications 1 à 5 et à partir de la machine faisant l'objet des revendications 6 à 10.

0092538

Fig.1

Fig.2

Fig.3